**Europäisches Patentamt**

**European Patent Office**

**Office européen des brevets**

(11) Veröffentlichungsnummer: **0 065 744**
**A1**

(12) # EUROPÄISCHE PATENTANMELDUNG

(21) Anmeldenummer: **82104351.0**

(22) Anmeldetag: 18.05.82

(51) Int. Cl.³: **B 23 D 61/04**

(30) Priorität: 21.05.81 DE 3120255

(43) Veröffentlichungstag der Anmeldung:
01.12.82 Patentblatt 82/48

(84) Benannte Vertragsstaaten:
BE CH DE FR GB IT LI LU NL SE

(71) Anmelder: Gebr. Heller Maschinenfabrik GmbH
Postfach 1428 Neuffener Strasse 54
D-7440 Nürtingen(DE)

(72) Erfinder: Klenk, Rolf
Rembrandtweg 4
D-7441 Grossbettlingen(DE)

(72) Erfinder: Werz, Walter
Neuffener Strasse 77
D-7433 Dettingen(DE)

(74) Vertreter: Jackisch, Walter, Dipl.-Ing.
Menzelstrasse 40
D-7000 Stuttgart 1(DE)

(54) Kreissägeblatt für Eisenwerkstoffe, insbesondere für Stahl.

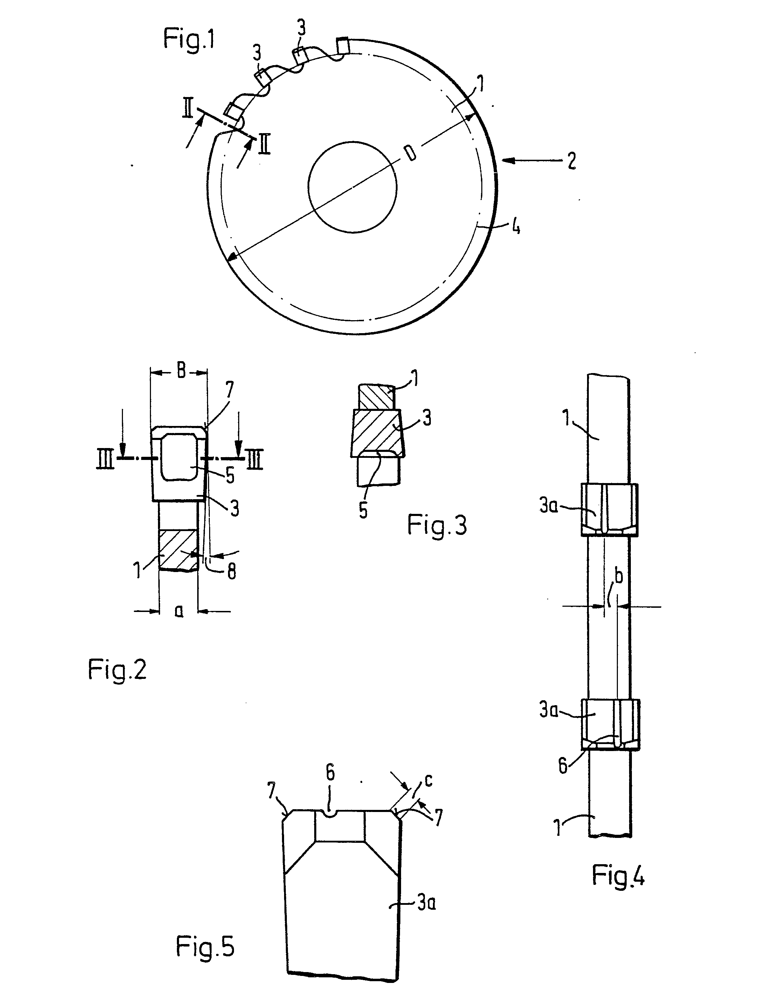

(57) Die Erfindung betrifft ein Kreissägeblatt für Eisenwerkstoffe, insbesondere für Stahl, mit einem Durchmesser D im Bereich von etwa 400 bis 800 mm, bestehend aus einem Stammblatt mit einer zentralen Aufnahmeöffung und auf dem Umfang des Stammblattes angeordneten Hartmetallschneidzähnen (3) (Fig. 2), deren in Umfangsrichtung verlaufende, radial äußere Kanten (7) angefast sind und die axial über die Stammblattseitenflächen vorstehen. Bekannte Kreissägeblätter haben eine Schnittbreite von 5 mm und mehr, wodurch insbesondere ein erhöhter Zerspanverlust und dadurch bedingte wesentlich höhere Gesamtschnittkosten anfallen. Erfindungsgemäß ist vorgesehen, daß bei einem Durchmesser D von 400 mm die Schnittbreite B der Hartmetallschneidzähne 3 in einem Bereich von 2,2 bis 3 mm liegt und bis zu einem Durchmesser D von 800 mm auf eine Schnittbreite B in einem Bereich von 3,2 bis 4,8 mm linear ansteigt. Bei überraschend großer Stabilität des Kreissägeblattes werden aufgrund der geringen Schnittbreite die Gesamtschnittkosten um bis zu 60% verringert, da erheblich kleinere Zerspanverluste anfallen, kleinere Antriebsleistungen erforderlich sind und weniger Material zur Herstellung des Kreissägeblattes benötigt wird.

Fig.1

EP 0 065 744 A1

0065744

Gebr. Heller, Maschinenfabrik
Gesellschaft mit beschränkter Haftung
Neuffener Str. 54
7440 Nürtingen

## Kreissägeblatt für Eisenwerkstoffe, insbesondere für Stahl

Die Erfindung betrifft ein Kreissägeblatt für Eisenwerkstoffe insbesondere für Stahl, gemäß Oberbegriff des Anspruchs 1.

Derartige bekannte Kreissägeblätter haben ein relativ dickes Stammblatt und sind mit Hartmetallzähnen von etwa 5 bis 7 mm Breite besetzt. Die Herstellungskosten derartiger Kreissägeblätter steigen proportional mit der Dicke des Stammblattes an, wobei insbesondere bei Kreissägeblättern mit großem Durchmesser und entsprechender Dicke durch die ausreichend breit auszuführenden Hartmetall schneidzähne erhebliche Materialkosten anfallen. Insbesonde bewirkt die relativ große Breite des Hartmetallschneidzahns eine erhebliche Zerspanung des zu trennenden Werkstückes, wodurch ein starker Materialverlust bei großer Geräuschentwicklung hervorgerufen wird. Der Materialverlus am Werkstück wird durch die sogenannten Zerspanungskosten wirtschaftlich erfaßt.

Aufgrund der breiten Schnittbreite erfordern derartige Kreissägeblätter sehr starke Antriebsleistungen, so daß die
Maschinenteile entsprechend groß ausgebildet werden müssen.
Bei großen Durchmessern sind die Kreissägeblätter zudem so
schwer, daß ein Auswechseln meist nur mittels Hebezeug
möglich ist, was ihre Handhabung erschwert.

Der Erfindung liegt die Aufgabe zugrunde, ein materialsparendes, auf Maschinen mit niedriger Antriebsleistung einsetzbares Kreissägeblatt zu schaffen, dessen Gesamtschnittkosten,
insbesondere die Herstellungs-, Antriebs- und Zerspanungskosten gegenüber bekannten Ausführungen erheblich vermindert
sind.

Die Aufgabe wird erfindungsgemäß durch die kennzeichnenden
Merkmale des Anspruchs 1 gelöst.

Das erfindungsgemäße Kreissägeblatt hat bei einem Durchmesser
von 400 mm eine kleine Schnittbreite im Bereich von 2,2 bis
3 mm; Kreissägeblätter mit größerem Durchmesser haben eine entsprechend größere Schnittbreite, die bei einem Durchmesser
von 800 mm in einem Bereich von maximal 3,2 bis 4,8 mm liegt.
Die Schnittbreite steigt bei wachsendem Durchmesser linear
an, so daß bei grafischer Darstellung der Schnittbreite über
dem Durchmesser der gesamte Schnittbreitenbereich zwischen
einer oberen, durch die Punkte D = 400 mm / B = 3 mm;
D = 800 mm / B = 4,8 mm bestimmten Geraden und einer unteren,
durch die Punkte D = 400 mm / B = 2,2 mm; D = 800 mm /
B = 3,2 mm bestimmten Geraden liegt.

Auch bei relativ großem Durchmesser wird eine um bis zu 50 %
geringere Schnittbreite als im Stand der Technik erzielt,
so daß die Zerspanverluste beim Schnitt und daher die Zerspanungskosten erheblich verringert sind. Aufgrund der geringeren Dicke zu den bekannten Kreissägeblättern ist das
erfindungsgemäße Kreissägeblatt relativ leicht, so daß es
ohne Hebezeug an der Maschine montiert werden kann. Aufgrund der geringeren Schnittbreite sind auch geringere Antriebsleistungen erforderlich, so daß die Antriebskosten gesenkt
sind. Die durch die geringere Dicke des Kreissägeblattes
mögliche Materialeinsparung, insbesondere die Einsparung
des wertvollen Hartmetalls der Schneidzähne, ermöglicht eine
sehr kostensparende Herstellung des Kreissägeblattes.
Weiterhin werden aufgrund der geringeren Schnittbreite eine
geringere Wärmeentwicklung und ein geringerer Späneanfall
auftreten. Überraschenderweise zeigt das erfindungsgemäße
Kreissägeblatt eine erheblich geringere Geräuschentwicklung
als die dicken Kreissägeblätter gemäß dem Stand der Technik.
Durch das erfindungsgemäße Kreissägeblatt können die Gesamtschnittkosten um bis zu 60 % gegenüber den Gesamtschnittkosten
bei bekannten Kreissägeblättern gesenkt werden.

Um bei den dünnen Stammblättern ungleichmäßige Schnittbelastungen und ein axiales Verlaufen zu vermeiden, ist die
Anfasung der in Umfangsrichtung verlaufenden, radial
äußeren Kanten der Hartmetallschneidzähne nur auf eine Breite
von etwa 0,1 bis 0,3 mm vorgesehen, so daß eine sichere
Schnittführung erzielt wird.

Weitere Merkmale der Erfindung ergeben sich aus den Ansprüchen,
der Beschreibung und den Zeichnungen.

Ausführungsbeispiele der Erfindung sind in den Zeichnungen
dargestellt und werden im folgenden näher beschrieben. Es zeigen:

Fig. 1　　　　　eine Ansicht eines Kreissägeblattes,

Fig. 2　　　　　einen Teilschnitt durch das Kreissägeblatt längs der Linie II-II aus
　　　　　　　　Fig. 1

Fig. 3　　　　　einen Schnitt durch einen Hartmetallschneidzahn gemäß Linie III-III
　　　　　　　　aus Fig. 2,

Fig. 4                 eine Draufsicht auf einen Teilum-
                       fang eines Kreissägeblattes .mit
                       Hartmetallschneidzähnen mit Spanteilernut,

Fig. 5                 eine Ansicht eines Hartmetallschneidzahns, aus Fig. 4.

Das Kreissägeblatt 1 in Fig. 1 hat auf seinem Umfang 2 angeordnete Hartmetallschneidzähne 3, deren jeweiliger Fuß auf dem
strichliniert gezeichneten Kreis 4 liegt. Erfindungsgemäß liegt
bei einen Durchmesser D des Kreissägeblatts von 400 mm die der
Schnittbreite entsprechende Breite B (Fig.2) der Hartmetallschneidzähne 3 im Bereich.  :
von etwa 2,2 bis 3 mm, wobei die Dicke a des Kreissägeblattes
jeweils geringer als die Breite B des Hartmetallschneidzahns
3 ist. Die Schnittbreite B steigt bei wachsendem Durchmesser
D des Kreissägeblattes linear an und erreicht bei einem Durchmesser D von 800 mm eine Schnittbreite B in einem Bereich
von 3,2 bis 4,8 mm. Die Hartmetallschneidzähne 3 stehen
axial jeweils geringfügig über die Seitenfläche des Kreissägeblattes über und haben bekannterweise jeweils einen
seitlichen Freischneidewinkel 8.

Im Vergleich zum Stand der Technik ist die Dicke der erfindungsgemäßen Kreissägeblätter um nahezu 50 % verringert.
Es ist überraschend, daß trotz dieser sehr geringen Dicke
der Kreissägeblätter bei·den relativ großen Durchmessern
einerseits die Hartmetallschneidzähne sicher am Umfang des
Kreissägeblattes gehalten sind und andererseits das Kreissägeblatt selbst trotz seiner geringen Dicke einen geraden
Schnittverlauf gewährleistet.

Die aufgrund der geringen Dicke des Kreissägeblattes erzielte
Materialersparnis wird durch das eingesparte Hartmetallmaterial
weiter vergrößert, da die Hartmetallschneidzähne in der
Schnittbreite gegenüber dem Stand der Technik ebenfalls geringer ausgebildet sind. Einerseits werden durch diese Materialersparnis die Herstellungskosten des Kreissägeblattes verringert, andererseits ist dadurch die Schnittbreite eines
Kreissägeblattes erheblich reduziert (bis zu 50%), so daß
beim Schnitt durch ein Werkstück nur geringe Zerspanverluste
anfallen, wodurch die Materialausbeute eines Werkstücks
wesentlich verbessert ist.

Die sehr dünnen Kreissägeblätter erfordern eine wesentlich
geringere Antriebsleistung als bekannte Ausführungen, so
daß entsprechend raumsparendere und kleinere Antriebsmaschinen
verwendet werden können, wobei zudem Antriebsenergie eingespart
werden kann. Da die dünnen Kreissägeblätter auch bei großem
Durchmesser noch ein verhältnismäßig geringes Gewicht
haben, können sie in der Regel von Hand montiert werden, so
daß kein Hebezeug oder dgl. notwendig ist. Aufgrund der geringen Schnittbreite des erfindungsgemäßen Kreissägeblattes
wird eine erheblich kleinere Menge an Spänen anfallen,
so daß die Spanabfuhrvorrichtungen kleiner dimensioniert
werden können. Weiterhin ist die durch die heißen Späne in der
Antriebsmaschine bzw. den Spanabfuhrvorrichtungen hervorgerufene Wärmeentwicklung aufgrund der verminderten Spanmenge geringer,
so daß durch Überhitzung auftretende Verformungen vermieden sind.

Durch die erfindungsgemäße Ausbildung des Kreissägeblattes
sind die für einen Schnitt anfallenden Gesamtkosten um bis
zu 60 % geringer als bei bekannten Kreissägeblättern.

Vorzugsweise haben die erfindungsgemäßen Kreissägeblätter
1 bei einem Durchmesser D von 500 mm eine Schnittbreite
im Bereich von 2,6 bis 2,9 mm, die bis auf eine Schnittbreite
von 3,2 bis 3,7 mm bei Kreissägeblättern mit einem Durchmesser von 710 mm linear ansteigt. Ein derartig dimensioniertes Kreissägeblatt hat eine hohe Stabilität, geringe
Schnittverluste und erfordert nur geringe Antriebsleistungen,
so daß die anfallenden Gesamtschnittkosten besonders niedrig
sind.

Um die Schnittführung des dünnen Kreissägeblattes 1 weiter
zu verbessern, sind die in Umfangsrichtung verlaufenden,
radial außenliegenden Kanten 7 (Fig.2 und 5) der angeordneten
Hartmetallschneidzähne 3 bzw. 3a nur auf eine Breite c (Fig.5) von etwa
0,1 bis 0,3 mm angefast. Bei Fasen mit derartig geringer
Breite tritt ein größenmäßig relevanter Unterschied zwischen
den einzelnen Fasen nicht auf, so daß eine Fasendifferenz
auch nicht zu einer einseitigen, axialen Schnittkraftbelastung des Kreissägeblattes und damit zu schlechter
Schnittführung führen kann.

Vorteilhafterweise ist in der Brustfläche des Hartmetallschneidzahns 3 (Fig. 2) eine Spanverformungsmulde 5 vorgesehen, durch die der vom Werkstück abgenommene Span in
seiner breiten Richtung gewölbt wird, wodurch eine Breitenverkürzung des Spans auftritt, so daß er leicht aus dem
Schnittspalt nach außen abgeführt werden kann. Die in Fig. 3
im Schnitt dargestellte Spanverformungsmulde 5 ist in
Richtung der Breite des Hartmetallschneidzahns gewölbt, wobei
ihre Ausdehnung nicht über die ganze Breite des Zahns
läuft.

Ebenso kann es vorteilhaft sein, in den Hartmetallschneidzähnen
3 Spanteilernuten 6 vorzusehen. Wie in den Fig. 4 und 5 gezeigt, verlaufen die Spanteilernuten, ausgehend von der
vorderen Brustschneide, entgegen der Drehrichtung in der
radial äußeren Fläche des Hartmetallschneidzahns 3a. Durch
eine derartige Spanteilernut 6 wird der abgehobene Span
unterteilt, so daß dessen Teilstücke leicht aus dem Schnittspalt abgeführt werden können, ohne darin zu verklemmen. Vorteilhafterweise sind die Spanteilernuten 6 einander benachbarter Hartmetallschneidzähne 3a axial zueinander versetzt
und weisen einen Abstand b voneinander auf. Vorteilhafterweise
haben die Spanteilernuten 6 einen gleichen Axialabstand von
der radialen Mittelebene des Kreissägeblattes.

Gebr. Heller, Maschinenfabrik
Gesellschaft mit beschränkter Haftung
Neuffener Str. 54
7440 Nürtingen

Ansprüche

1. Kreissägeblatt für Eisenwerkstoffe, insbesondere für Stahl, mit einem Durchmesser im Bereich von etwa 400 bis 800 mm, bestehend aus einem Stammblatt mit einer zentralen Aufnahmeöffnung und auf dem Umfang des Stammblattes angeordneten Hartmetallschneidzähnen, deren in Umfangsrichtung verlaufende, radial äußeren Kanten angefast sind und die axial über die Stammblattseitenflächen vorstehen, dadurch gekennzeichnet, daß bei einem Durchmesser (D) des Kreissägeblatts von 400 mm die Schnittbreite (B) der Hartmetallschneidzähne (3,3a) in einem Bereich von 2,2 bis 3 mm liegt und bis zu einem Durchmesser (D) von 800 mm auf eine Schnittbreite (B) in einem Bereich von 3,2 bis 4,8 mm linear ansteigt.

2. Kreissägeblatt nach Anspruch 1, dadurch gekennzeichnet, daß bei einem Durchmesser (D) von 500 mm die Schnittbreite (B) in einem Bereich von 2,6 bis 2,9 mm liegt und bei vergrößertem Durchmesser (D) bis zu 710 mm auf eine Schnittbreite (B) in einem Bereich von 3,2 bis 3,7 mm linear ansteigt.

3. Kreissägeblatt nach Anspruch 1 oder 2, dadurch gekennzeichnet, daß die Anfasung auf eine Breite von etwa 0,1 bis 0,3 mm vorgesehen ist.

-2-

0065744

4. Kreissägeblatt nach einem der Ansprüche 1 bis 3, dadurch gekennzeichnet, daß die Hartmetallschneidzähne (3) in ihrer Brustfläche jeweils eine Spanverformungsmulde (5) aufweisen.

5. Kreissägeblatt nach einem der Ansprüche 1 bis 4, dadurch gekennzeichnet, daß in der Brustschneide eines Hartmetallschneidzahns (3a) eine in Umfangsrichtung verlaufende Spanteilernut (6) angeordnet ist.

6. Kreissägeblatt nach Anspruch 5, dadurch gekennzeichnet, daß die Spanteilernuten (6) von in Umfangsrichtung benachbarten Hartmetallschneidzähnen (3a) zueinander versetzt angeordnet sind (Fig. 4).

-3-

1/1

Fig.1

Fig.2

Fig.3

Fig.4

Fig.5

0065744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.³) |
|---|---|---|---|
| X | FR-A-2 341 392 (JAGERS) <br> * Seite 2, Zeilen 21-25; Figuren * <br> & DE - A - 2 606 598 | 1 | B 23 D 61/04 |
| X | FR-A-2 252 182 (STRIDSBERG) <br> * Seite 3, Zeilen 8-12; Figuren * <br> & DE - A - 2 453 205 | 1 | |
| X | DE-A-1 652 756 (DEMAG) <br> * Seite 1, Zeilen 8-11; Figuren * | 1 | |
| X | FR-A-2 462 958 (LENNARTZ) <br> * Seite 6, Zeile 22 - Seite 7, Zeile 27; Figuren * & DE - A - 2 931 965 | 4,5 | |
| X | US-A-2 422 111 (LUNDBERG) <br> * Spalte 4, Zeilen 20-31; Figuren * | 4 | |
| X | CH-A- 118 773 (WAGNER) <br> * Seite 2, rechte Spalte, Zeilen 9-12; Figuren * | 5,6 | |
| X | FR-A-2 294 011 (CENTRO) <br> * Seite 2, Zeilen 8-28; Figuren * | 5,6 | |

RECHERCHIERTE SACHGEBIETE (Int Cl.³)

B 23 D 61/00
B 27 B 33/00

Der vorliegende Recherchenbericht wurde für alle Patentansprüche erstellt

| Recherchenort | Abschlußdatum der Recherche | Prüfer |
|---|---|---|
| DEN HAAG | 03-08-1982 | HORVATH R.C. |

BAD ORIGINAL